# EUROPÄISCHE PATENTSCHRIFT

(11) **EP 2 404 042 B1**
(45) Veröffentlichungstag und Bekanntmachung des Hinweises auf die Patenterteilung: **07.05.2014**
(21) Anmeldenummer: 10705387.8
(22) Anmeldetag: 26.02.2010
(51) Int. Cl.: F01N 3/20, F01N 9/00

(54) **VERFAHREN ZUM BETRIEB EINER VORRICHTUNG ZUR REINIGUNG VON ABGAS MIT EINEM HEIZAPPARAT**
METHOD FOR OPERATING A DEVICE FOR CLEANING EXHAUST HAVING A HEATING APPARATUS
PROCÉDÉ POUR FAIRE FONCTIONNER UN DISPOSITIF DESTINÉ À LA PURIFICATION DE GAZ D'ÉCHAPPEMENT À L'AIDE D'UN APPAREIL DE CHAUFFAGE

(30) Priorität: 06.03.2009 DE 102009012094
(43) Veröffentlichungstag der Anmeldung: 11.01.2012
(73) Patentinhaber: Emitec Gesellschaft für Emissionstechnologie mbH, 53797 Lohmar (DE); Volkswagen AG, 38440 Wolfsburg (DE)
(72) Erfinder: NAGEL, Thomas, 51766 Engelskirchen (DE); KRUSE, Carsten, 53842 Troisdorf (DE); KAHMANN, Gerhard, 38302 Wolfenbüttel (DE); DÜSTERDIEK, Thorsten, 30659 Hannover (DE)
(74) Vertreter: Rössler, Matthias
(86) Internationale Anmeldenummer: PCT/EP2010/052462
(87) Internationale Veröffentlichungsnummer: WO 2010/100084

(56) Entgegenhaltungen:
- DE-A1- 19 648 427
- DE-A1-102007 025 419
- US-A- 5 224 335
- US-A- 5 325 038

## Beschreibung

Die vorliegende Erfindung betrifft ein Verfahren zum Betrieb einer Vorrichtung zur Reinigung von Abgas einer mit Luftüberschuss betriebenen Verbrennungskraftmaschine, wobei die Vorrichtung zumindest einen wenigstens teilweise mit Abgas in Kontakt stehenden Heizapparat umfasst, der mittels elektrischer Energie aktiviert werden kann und wenigstens teilweise mit einer Oxidationsbeschichtung ausgeführt ist. Das Verfahren findet insbesondere Anwendung bei Abgasanlagen von Dieselmotoren von Fahrzeugen, insbesondere Personenkraftwagen.

Es ist bekannt, elektrisch beheizbare Wabenkörper dazu einzusetzen, um bereits kurz nach dem Kaltstart und/oder Wiederstart der Verbrennungskraftmaschine die so genannte Anspringtemperatur für die Oxidationsbeschichtung zu erreichen, beispielsweise Temperaturen oberhalb von 200 °C. Ab dieser Temperatur kann eine katalytische Unterstützung der Umsetzung der im Abgas enthaltenen Schadstoffe mit Hilfe der Oxidationsbeschichtung erfolgen, wobei eine exotherme Reaktion in Gang gesetzt wird, so dass die Temperatur des Abgases schnell weiter erhöht werden kann und auch nachfolgende Abgasbehandlungseinheiten ihre für die katalytische Umsetzung notwendige Temperatur erreichen. Insoweit ist auch als bekannt anzusehen, dass dieser Heizapparat insbesondere nach dem Kaltstart beziehungsweise Wiederstart für einen vorgegebenen Zeitraum aktiviert wird und danach abgeschaltet wird. Danach liegen insbesondere bei Kraftstoffen mit erhöhtem Kohlenwasserstoff-Anteil Bedingungen vor, bei denen die Aktivität der Abgasreinigungseinheiten aufgrund dieser exothermen Reaktion aufrecht erhalten werden kann.

So erläutert beispielsweise die US 5,325,038 eine Methode, wie energieeffizient der Betrieb eines solchen, elektrisch beheizbaren Wabenkörpers nach dem Start der Verbrennungskraftmaschine durchgeführt werden kann. Dort werden insbesondere Maßnahmen zum Energiemanagement vorgeschlagen, so dass sowohl ein elektrischer Anlasser als auch der elektrisch beheizbare Wabenkörper unmittelbar nach dem Start betrieben werden können.

Gerade bei Verbrennungskraftmaschinen, die mit Luftüberschuss betrieben werden, wie beispielsweise Dieselmotoren, liegt regelmäßig eine Zusammensetzung des Abgases vor, dass heißt der Anteil an Kohlenwasserstoffen ist geringer. Zudem ist bei diesen Verbrennungskraftmaschinen zu berücksichtigen, dass das Abgas meist mit einer geringeren Temperatur in die Abgasanlage geführt wird, insbesondere zur Vermeidung von hohen Stickoxidanteilen. Zudem wurde auch erkannt, dass solche Verbrennungskraftmaschinen gerade im Niederlastbereich in relativ großen Mengen kühle Abgasvolumina durch die Abgasanlage führen. Unter diesen Umständen kann das Problem entstehen, dass die Anspringtemperatur der Oxidationsbeschichtung wieder unterschritten wird und somit die Aktivität der Abgasanlage nicht für alle Betriebspunkte gewährleistet ist.

Hiervon ausgehend ist es Aufgabe der vorliegenden Erfindung, die mit Bezug auf den Stand der Technik geschilderten Probleme zumindest teilweise zu lösen. Insbesondere soll ein Betriebsverfahren für eine solche Vorrichtung zur Reinigung von Abgas einer mit Luftüberschuss betriebenen Verbrennungskraftmaschine angegeben werden, bei der mit möglichst geringem energetischen Aufwand die Funktionalität über den Betrieb der Verbrennungskraftmaschine aufrecht erhalten werden soll.

Diese Aufgaben werden gelöst mit einem Verfahren gemäß den Merkmalen des Patentanspruchs 1 sowie einem Kraftfahrzeug mit den Merkmalen des Patentanspruchs 7. Weitere vorteilhafte Ausgestaltungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvolle, Weise miteinander kombiniert werden können und weitere Ausgestaltungen der Erfindung aufzeigen. Die Beschreibung, insbesondere in Zusammenhang mit den Figuren, erläutert die Erfindung und gibt hier zusätzliche Ausführungsbeispiele an.

Das erfindungsgemäße Verfahren zum Betrieb einer Vorrichtung zur Reinigung von Abgas einer mit Luftüberschuss betriebenen Verbrennungskraftmaschine, wobei die Vorrichtung zumindest einen wenigstens teilweise mit Abgas in Kontakt stehenden Heizapparat umfasst, der mit elektrischer Energie aktiviert werden kann und wenigstens teilweise mit einer Oxidationsbeschichtung ausgeführt ist, umfasst zumindest folgende Schritte:
a) der wenigstens eine Heizapparat wird über eine vorgegebene erste Solltemperatur erwärmt,
b) nachfolgend wird zumindest die Temperatur des wenigstens einen Heizapparates oder des Abgases überwacht, und
c) eine Anhebung des Kohlenwasserstoff-Anteils des Abgases wird veranlasst, wenn zumindest
   - die Temperatur des Heizapparates oder des Abgases eine Grenztemperatur Unterschritten hat, oder
   - eine Niedriglastphase der Verbrennungskraftmaschine vorliegt.

Im Hinblick auf die Vorrichtung zur Reinigung von Abgas einer mit Luftüberschuss betriebenen Verbrennungskraftmaschine wird insbesondere von einer Abgasanlage ausgegangen, die mit einem Dieselmotor und/oder einem Magermotor verbunden ist. Die Vorrichtung umfasst dabei regelmäßig eine Abgasleitung, in die wenigstens ein Heizapparat integriert ist. Der Heizapparat kann bedarfsgerecht mit elektrischer Energie aktiviert werden, wobei der Heizapparat beispielsweise mit Strom durchflossen und aufgrund der Ohmschen Widerstandswärme aufgeheizt wird. Dazu kann der Heizapparat an ein entsprechendes elektrisches Bordnetz, beispielsweise 12V oder 24V, angeschlossen sein. Ein solcher Heizapparat bildet regelmäßig eine relativ große Oberfläche aus, an der das Abgas vorbeiströmt. Diese Oberfläche kann teilweise mit einer Oxidationsbeschichtung ausgeführt sein. Bevorzugt ist die Ausgestaltung, dass die gesamte mit Abgas in Kontakt stehende Oberfläche mit einer Oxidationsbeschichtung ausgeführt ist. Die Oxidationsbeschichtung kann selbst unterschiedlich ausgeführt sein; regelmäßig wird diese eine Washcoat-Beschichtung aufweisen, die mit Edelmetallen, wie beispielsweise Platin, Rhodium und dergleichen, dotiert ist. Bevorzugt ist weiter, dass der Heizapparat nach der Verbrennungskraftmaschine die erste Abgasbehandlungseinheit ist, mit der das Abgas zur katalytischen Umwandlung in Kontakt gebracht wird.

Bei einer solchen Vorrichtung wird also gemäß a) zunächst vorgeschlagen, den Heizapparat dazu zu benutzen, eine vorgegebene erste Solltemperatur zu erreichen. Die erste Solltemperatur ist so zu wählen, dass die Oxidationsbeschichtung eine ausreichende Aktivität beziehungsweise Effektivität hinsichtlich der Umsetzung der im Abgas enthaltenen Schadstoffe hat. Insoweit wird Schritt a) insbesondere beim Start der Verbrennungskraftmaschine durchgeführt. Hierzu kann der Heizapparat beispielsweise mehrere Sekunden, überschussweise bis hin zu 20 Sekunden, mit elektrischer Energie versorgt werden, die z. B. der Batterie des Kraftfahrzeuges oder einem vergleichbaren Apparat entnommen wird.

Im Nachhinein, also während des weiteren Betriebs der Vorrichtung, wird zumindest die Temperatur des zumindest einen Heizapparates oder des Abgases überwacht. Selbstverständlich ist auch möglich, dass beide Temperaturen überwacht werden. Hierfür können Sensoren vorgesehen sein, die mit dem Abgas und/oder dem Heizapparat in Kontakt sind, es ist aber auch möglich, die Temperatur, beispielsweise aufgrund von Datenmodellen, zumindest teilweise zu berechnen beziehungsweise zu schätzen. Die Überwachung kann kontinuierlich und/oder zu vorgegebenen Zeitpunkten nach vorgebbaren Intervallen oder als Reaktion auf besondere Zustände der Verbrennungskraftmaschine durchgeführt werden.

Aufgrund dieser Überwachung ist es möglich, einen Vergleich mit einer vorgegebenen Grenztemperatur des Heizapparates und/oder des Abgases vorzunehmen. Wird diese Grenztemperatur erreicht beziehungsweise unterschritten, wird hier vorgeschlagen, die Abgaszusammensetzung so zu verändern, dass der Kohlenwasserstoff-Anteil erhöht wird. Insoweit liegt die Grenztemperatur bevorzugt oberhalb der so genannten Anspringtemperatur der Oxidationsbeschichtung. Der zusätzliche Kohlenwasserstoff führt nun dazu, dass mehr thermische Energie infolge der exothermen Reaktion der Kohlenwasserstoffe auf der Oxidationsbeschichtung bereitgestellt und somit ein weiteres Absinken der Temperatur des Heizapparates beziehungsweise der Oxidationsbeschichtung verhindert wird. Alternativ oder kumulativ dazu ist auch möglich, generell die Anhebung des Kohlenwasserstoff-Anteils im Abgas zu veranlassen, wenn eine Niedriglastphase der Verbrennungskraftmaschine identifiziert und/oder initiiert wird. Mit "Niedriglastphase" wird insbesondere ein Betrieb der Verbrennungskraftmaschine mit niedriger Drehzahl und/oder Last bezeichnet, also beispielsweise Leerlauf, Schub und dergleichen. Gerade bei Dieselmotoren wird während einer solchen Niedriglastphase ein großer Anteil an Luft mit niedriger Temperatur durch die Vorrichtung zur Reinigung von Abgas hindurchgeführt, was zum Auskühlen der Abgasbehandlungseinheiten führen kann. Dem wird entgegengewirkt, indem der Kohlenwasserstoff-Anteil des Abgases angehoben wird und die chemischen, exothermen Reaktionen verstärkt ablaufen.

Damit löst sich die Erfindung von der Vorstellung, dass allein der Heizapparat zur Aufrecherhaltung der Effektivität beziehungsweise der Konvertierungsfähigkeit der Abgasanlage dient. Vielmehr wird hier vorgeschlagen, den Heizapparat nur in wenigen Betriebsphasen einzusetzen, beispielsweise nur während der Startphase der Verbrennungskraftmaschine. Während der Folgebetriebes ist also bevorzugt, hier nur mittels Schritt c) die Aufrechterhaltung der Konvertierungsfähigkeit zu gewährleisten und eine weitere Aktivierung des Heizapparates mittels elektrischer Energie zu vermeiden. Damit kann insbesondere das elektrische Versorgungssystem des Kraftfahrzeuges entlastet werden, so dass hier ausreichend Energie für die übrigen Komponenten des Kraftfahrzeuges bereitgestellt werden kann.

Gemäß einer Weiterbildung des Verfahrens wird vorgeschlagen, dass die Anhebung des Kohlenwasserstoff-Anteils des Abgases so vorgenommen wird, dass die Umwandlung der Kohlenwasserstoffe des Abgases an der Oxidationsbeschichtung ein Auskühlen des wenigstens einen Heizapparates unter einer zweiten Solltemperatur verhindert. Insofern erfolgt die Anhebung des Kohlenwasserstoff-Anteils beispielsweise unter Berücksichtigung der vorliegenden beziehungsweise zu erwartenden Temperatur des Heizapparates und/oder des Abgases, der Reaktionsfreundlichkeit des generierten Abgases, der bereitgestellten Oberfläche mit Oxidationsbeschichtung, der Art der Niedriglastphase, etc.. Die zweite Solltemperatur liegt bevorzugt unterhalb der ersten Solltemperatur; aber es ist wünschenswert, diese oberhalb der so genannten Anspringtemperatur der Oxidationsbeschichtung zu wählen.

Des Weiteren wird als vorteilhaft angesehen, dass mehrere Zylinder der Verbrennungskraftmaschine mit einer Kraftstoffzugabe ausgeführt sind, wobei in Schritt c) mittels wenigstens einer Kraftstoffzugabe eine vorgegebene Kraftstoffmenge für den wenigstens einen Heizapparat bereitgestellt wird. Gerade Dieselmotoren weisen regelmäßig 4, 6, 8 oder 12 Zylinder auf, über die die der Verbrennungskraftmaschine zugeführten Kraftstoff-Luftgemische zugeführt und verbrannt werden. Die Kraftstoffzugabe wird beispielsweise mittels Einspritzdüsen verwirklicht, die mit dem Kraftstoffversorgungssystem verbunden und geregelt aktivierbar sind. Das heißt nun hier mit anderen Worten auch, dass diese Kraftstoffzugabe so erfolgt, dass der Kraftstoff (unverbrannt) in die Vorrichtung zur Reinigung von Abgasen eingegeben wird und folglich schließlich den Heizapparat erreicht. Erst an der Oxidationsbeschichtung des Heizapparats soll eine exotherme Reaktion mit dem Kohlenwasserstoff-Anteil den Kraftstoff erfolgen, so dass hier thermische Energie zur Erreichung der Betriebstemperatur des Heizapparates oberhalb der Anspringtemperatur generiert wird. Grundsätzlich ist möglich, dass über jeweils eine (verschiedene) Kraftstoffzugabe die erforderliche Menge an Kraftstoff insgesamt oder portioniert in die Vorrichtung zur Reinigung von Abgas eingeleitet wird.

Bevorzugt ist hierbei jedoch, dass stets alle Kraftstoffzugaben aller Zylinder der Verbrennungskraftmaschinen eine Teilmenge der vorgegebenen Kraftstoffmenge bereitstellen. Das heißt beispielsweise, dass zunächst identifiziert wird, welche Kraftstoffmenge benötigt wird, um die gewünschten Betriebsbedingungen in der Abgasanlage einzustellen. Diese Kraftstoffmenge wird nun bevorzugt gleichmäßig auf die Anzahl der verfügbaren Kraftstoffzugaben verteilt, so dass diese (insbesondere zeitlich versetzt) jeweils ihre Teilmenge einspritzen. Dies hat den Vorteil, dass alle Zylinder gleichmäßig benutzt werden, ebenso wie die nachfolgenden Abgasleitungen. Damit wird auch sichergestellt, dass nicht bestimmte Bereiche der Abgasanlage stärker mit den Kraftstoffen in Kontakt kommen, was insbesondere eine mögliche Alterung der Abgasleitung beziehungsweise der Abgasreinigungseinheiten und insbesondere der Oxidationsbeschichtung auf dem Heizapparat verhindert.

Gemäß einer Weiterbildung des Verfahrens wird auch vorgeschlagen, dass die Anhebung des Kohlenwasserstoff-Anteils des Abgases in einer Schubphase der Verbrennungskraftmaschine erfolgt. Die Schubphase tritt im Fahrbetrieb beispielsweise auf, wenn eine Verzögerung des Fahrzeugs stattfindet oder dieses sich auf einer Gefällestrecke befindet, wobei ein vom Fahrer vorgegebenes Fahrerwunschmoment kleiner als ein momentanes Schubmoment des Kraftfahrzeugs ist. In der Schubphase wird üblicherweise die Kraftstoffzufuhr unterbrochen, so dass die Verbrennungskraftmaschine nicht gefeuert betrieben wird (Schubabschaltung). Damit ist ein besonders geringer Kohlenwasserstoff-Anteil im Abgas festzustellen, wobei hier von dem erfindungsgemäßen Verfahren abgewichen wird, wenn die entsprechenden Voraussetzungen vorliegen.

Außerdem wird hier auch vorgeschlagen, dass ermittelt wird, ob in Schritt c) ein Auskühlen des wenigstens einen Heizapparates unter eine zweite Solltemperatur verhindert wird, wobei im Fall einer Negativbewertung der wenigstens eine Heizapparat zusätzlich intermittierend mittels elektrischer Energie aktiviert wird. Das heißt mit anderen Worten, dass bereits im Vorfeld beziehungsweise während Schritt c) geprüft wird, ob die Temperatur des Heizapparates oberhalb einer zweiten Solltemperatur allein mittels der Anhebung des Kohlenwasserstoff-Anteils erreichbar ist. Sollte dies nicht möglich sein, beispielsweise weil ein zu hoher Temperaturabfall zu erwarten ist und/oder die hierfür benötigte Kraftstoffmenge zu groß ist, wird als eine Art "Notmaßnahme" der Heizapparat mit elektrischer Energie neu aktiviert. Dies soll jedoch nicht im Dauerbetrieb erfolgen, sondern intermittierend, also insbesondere getaktet. Hierfür wird der Heizapparat mehrmals, beispielsweise mehr als 10 mal oder 20 mal über einen Zeitraum von weniger als 1 s mit elektrischer Energie versorgt, wobei ebenfalls Pausen eingehalten werden, die unterhalb einer Sekunde liegen. Beispielsweise kann der Heizapparat für 10 bis 50 ms [Millisekunden] bestromt werden und danach mit einer Pause im ähnlichen Zeitrahmen wieder deaktiviert werden, bevor ein neuer Stromimpuls erzeugt wird. Mit dieser intermittierenden Betriebsweise wird der Einsatz elektrischer Energie reduziert und das Bordnetz entlastet.

Gemäß einem weiteren Aspekt der Erfindung wird auch ein Kraftfahrzeug, aufweisend eine mit Luftüberschuss betriebene Verbrennungskraftmaschine angegeben, die mehrere Zylinder mit jeweils einer Kraftstoffzugabe hat, und mit einer Vorrichtung zur Reinigung des in der Verbrennungskraftmaschine erzeugten Abgases, wobei die Vorrichtung wenigstens einen Heizapparat nach Art eines elektrisch beheizbaren Wabenkörpers aufweist, der mit einer Spannungswelle und einer Regeleinheit verbunden ist, wobei das Kraftfahrzeug und die Regeleinheit eingerichtet zur Durchführung des hier erfindungsgemäß beschriebenen Verfahrens sind.

Bei dem Kraftfahrzeug handelt es sich insbesondere um einen Personenkraftwagen, der mit einem Dieselmotor ausgeführt ist. Auch wenn es grundsätzlich ausreicht, nur einen Heizapparat für die Behandlung des gesamten Abgasstromes bereitzustellen, können gleichwohl auch mehrere Heizapparate, beispielsweise in unterschiedlichen, getrennten Strömungswegen des Abgases vorgesehen sein. Die Ausgestaltung des Heizapparates nach Art eines elektrisch beheizbaren Wabenkörpers hat den Vorteil, dass hier eine besonders innige Kontaktierung des Abgases ermöglicht wird. Als Beispiel für einen solchen elektrisch beheizbaren Wabenkörper wird auf die WO 89/10471 A1 verwiesen. Der elektrisch beheizbare Wabenkörper umfasst demnach bevorzugt eine metallische Wabenstruktur, die mit einer Mehrzahl zumindest teilweise strukturierter metallischer Folien aufgebaut ist, die für das Abgas durchströmbare Kanäle bilden. Der Wabenkörper ist dabei teilweise so gegeneinander elektrisch isoliert und mit der Spannungsquelle verbunden, dass ein oder mehrere Strompfade durch die Wabenstruktur ausgebildet sind. Als Spannungsquelle kommen beispielsweise ein Generator und/oder eine Batterie in Betracht. Die Regeleinheit kann auch Teil einer Motorsteuerung sein, so dass hier zu vorgegebenen Zeitpunkten unter Berücksichtigung diverser Betriebsparameter des Kraftfahrzeuges eine Versorgung mit elektrischer Energie ermöglicht ist. Teil der Regeleinheit kann demnach auch ein entsprechendes Datenmodell und/oder eine entsprechende Software sein, die einen entsprechenden erfindungsgemäßen Betrieb realisiert.

Die Erfindung sowie das technische Umfeld werden nachfolgend anhand der Figuren erläutert. Die Figuren zeigen besonders bevorzugte Ausführungsvarianten der Erfindung, auf die diese jedoch nicht beschränkt ist. Es zeigen schematisch:
- Fig. 1:: ein Kraftfahrzeug mit einer Abgasbehandlungseinrichtung,
- Fig. 2:: einen elektrisch beheizbaren Wabenkörper, und
- Fig. 3:: ein Temperatur- Verlaufsdiagramm.

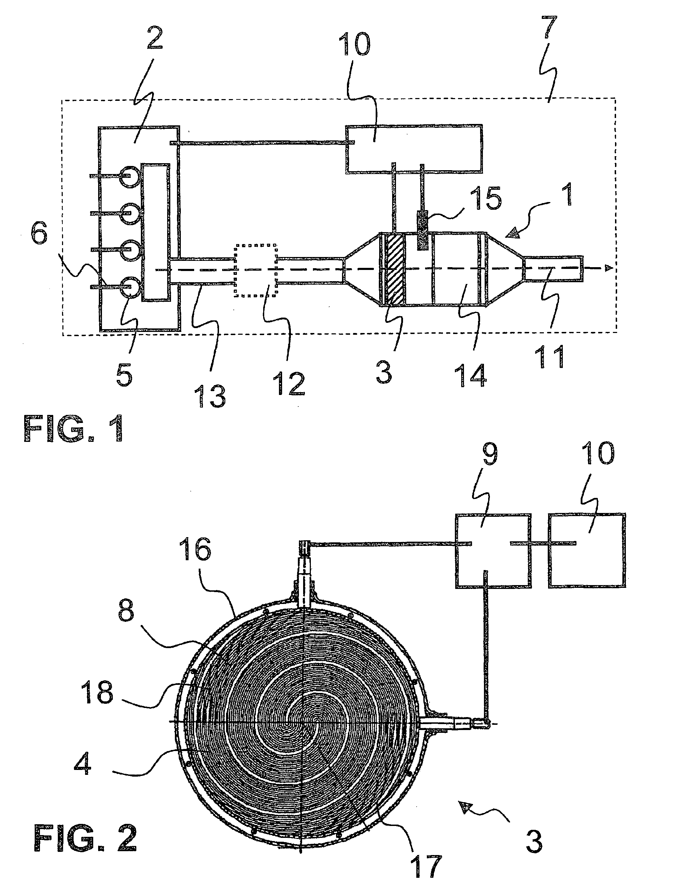

Die Fig. 1 veranschaulicht schematisiert ein Kraftfahrzeug 7 mit einer Verbrennungskraftmaschine 2, insbesondere nach Art eines Dieselmotors. Die Verbrennungskraftmaschine 2 umfasst hier vier Zylinder 5, die jeweils eine eigene unabhängig betreibbare Kraftstoffzugabe 6 aufweisen. Das in den Zylindern 5 generierte Abgas wird dann in einer Abgasleitung 13 zusammengeführt, in der beispielsweise auch ein Turbolader 12 integriert sein kann. Der Turbolader 12 kann beispielsweise nach Art eines Abgasturboladers ausgeführt sein, der gleichzeitig die für die Verbrennungsvorgänge in der Verbrennungskraftmaschine erforderliche Luft komprimiert zuführt. Grundsätzlich ist möglich, dass zwischen den Zylindern 5 und dem Turbolader 12 weitere Oxidationskatalysatoren vorgesehen sind, dies ist aber nicht zwingend erforderlich. Somit ist auch möglich, dass das Abgas, das in der angedeuteten Strömungsrichtung 12 durch die Abgasleitung 13 hindurchgeführt wird, als erstes auf einen Heizapparat 3 mit der Oxidationsbeschichtung trifft. Weiter stromabwärts können mehrere zusätzliche Abgasbehandlungseinheiten 14 vorgesehen sein, beispielsweise Partikelfallen, Adsorber, Reduktionskatalysatoren, Dreiwegekatalysatoren und ähnliches. Zum Betrieb dieser Vorrichtung 1 und zur Reinigung der Abgasverbrennungskraftmaschine 2 ist eine Regeleinheit 10 vorgesehen, die insbesondere mit der Verbrennungskraftmaschine 2 und dem Heizapparat 3 interagiert. Zusätzlich kann die Regeleinheit 10 mit Sensoren 15 zusammenwirken, die z. B. die Temperatur des Abgases erfassen.

Fig. 2 veranschaulicht schematisch in einer stirnseitigen Ansicht eine Ausführungsvariante eines elektrisch beheizbaren Wabenkörpers 8 als eine bevorzugte Ausführungsvariante eines Heizapparats 3. Der Wabenkörper 8 weist eine Vielzahl von miteinander verschlungenen, glatten und gewellten Metallfolien 18 auf, die wechselweise aneinander liegen und Kanäle 17 zum Durchströmen des Abgases bereitstellen. Alle Metallfolien 18 sind mit einer Oxidationsbeschichtung 4 ausgefüllt. Dabei sind einzelne Pakete der Metallfolien 18 gegeneinander elektrisch isoliert, so dass der Strom bedarfsgerecht von einer Elektrode hinzugeführt werden kann, den Wabenkörper 8 durchströmt, und über die andere Elektrode wieder abgenommen wird. Diese Metallfolien 18 sind zudem elektrisch isoliert im Gehäuse 16 gelagert, durch die die Elektroden ebenfalls elektrisch isoliert durchgeführt sind. Für den Betrieb des Wabenkörpers 8 ist eine Spannungsquelle 9 vorgesehen, die mit der Regeleinheit 10 zusammenwirkt, um bedarfsgerecht elektrische Energie hin zum Heizapparat 3 zu führen.

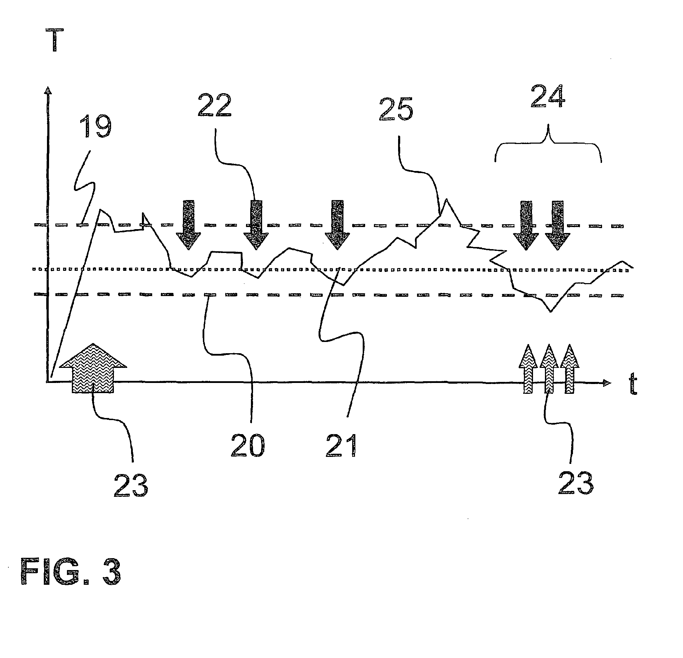

Die Fig. 3 zeigt nun schematisch einen überwachten Temperaturverlauf 25 über die Zeit, in der die Vorrichtung zur Reinigung von Abgas betrieben wird. Links in Fig. 3 ist dargestellt, dass zunächst in einem ersten Zeitraum elektrische Energie 23 dem Heizapparat zugeführt, so dass das Abgas beziehungsweise der Heizapparat möglichst schnell nach dem Kaltstart die erste Solltemperatur 19 erreicht beziehungsweise überschreitet. Die erste Solltemperatur 19 liegt bevorzugt deutlich über der Anspringtemperatur der Oxidationsbeschichtung, beispielsweise 100 °C oberhalb der Anspringtemperatur. Aufgrund des Fahrzyklusses wird nach dem Abschalten der elektrischen Energie 23 der überwachte Temperaturverlauf 25 entsprechend der Last der Verbrennungskraftmaschine varüeren. Wird jedoch festgestellt, dass die überwachte Temperatur eine Grenztemperatur 21 unterschreitet, wird hier Kohlenwasserstoff 22 zugeführt, so dass eine exotherme Reaktion an der Oxidationsbeschichtung des Heizapparats stattfindet und die Temperatur wieder ansteigt. Damit wird insbesondere erreicht, dass der überwachte Temperaturverlauf 25 wieder oberhalb der Grenztemperatur 21 verläuft. Diese Zugabe von Kohlenstoffwasserstoff 22 erfolgt bevorzugt jedes Mal, wenn die Grenztemperatur 21 unterschritten wird. Die Grenztemperatur 21 liegt ebenfalls oberhalb der Anspringtemperatur der Oxidationsbeschichtung, beispielsweise mindestens 30 °C oberhalb.

Rechts in Fig. 3 ist ein mögliches Szenario dargestellt, wie es in einer extremen Niedriglastphase 24, insbesondere einer längeren Schubabschaltung, eintreten könnte. Hierbei sackt der Temperaturverlauf 25 deutlich unterhalb der Grenztemperatur 21 ab, so dass hier neben einer erhöhten, gegebenenfalls mehrfachen, Zugabe von Kohlenwasserstoff 22 zusätzlich intermittierend elektrische Energie 23 mittels des Heizapparates zugeführt wird. Mit dieser kombinierten Maßnahme kann ebenfalls schnell erreicht werden, dass der überwachte Temperaturverlauf oberhalb der Grenztemperatur 21 verläuft.

Es ist darauf hinzuweisen, dass eine Reihe von Maßnahmen abgewandelt werden können, ohne das erfindungsgemäße Konzept zu verlassen. Insbesondere seien hier die unterschiedlichen Ausgestaltungen des Heizapparates, dessen Position in der Abgasanlage, die sensorischen Erfassungsmittel und dergleichen angesprochen. Selbstverständlich kann das Verfahren gegebenenfalls auch in vorteilhafter Weise bei anderen Verbrennungskraftmaschinen sinnvoll sein.

### Bezugszeichenliste

- 1: Vorrichtung
- 2: Verbrennungskraftmaschine
- 3: Heizapparat
- 4: Oxidationsbeschichtung
- 5: Zylinder
- 6: Kraftstoffzugabe
- 7: Kraftfahrzeug
- 8: Wabenkörper
- 9: Spannungsquelle
- 10: Regeleinheit
- 11: Strömungsrichtung
- 12: Turbolader
- 13: Abgasleitung
- 14: Abgasbehandlungseinheit
- 15: Sensor
- 16: Gehäuse
- 17: Kanal
- 18: Metallfolie
- 19: erste Solltemperatur
- 20: zweite Solltemperatur
- 21: Grenztemperatur
- 22: Kohlenwasserstoff
- 23: elektrische Energie
- 24: Niedriglastphase
- 25: überwachter Temperaturverlauf

## Patentansprüche

1. Verfahren zum Betrieb einer Vorrichtung (1) zur Reinigung von Abgas einer mit Luftüberschuss betriebenen Verbrennungskraftmaschine (2), wobei die Vorrichtung (1) zumindest einen wenigstens teilweise mit Abgas in Kontakt stehenden Heizapparat (3) umfasst, der mittels elektrischer Energie aktiviert werden kann und wenigstens teilweise mit einer Oxidationsbeschichtung (4) ausgeführt ist, wobei:
a) der wenigstens eine Heizapparat (3) über eine vorgegebene erste Solltemperatur (19) erwärmt wird,
b) nachfolgend zumindest die Temperatur des wenigstens einen Heizapparates (3) oder des Abgases überwacht wird, und
c) eine Anhebung des Kohlenwasserstoff-Anteils des Abgases veranlasst wird, wenn zumindest
- die Temperatur des Heizapparates (3) oder des Abgases eine Grenztemperatur (21) Unterschritten hat, oder
- eine Niedriglastphase (24) der Verbrennungskraftmaschine (2) vorliegt.

2. Verfahren nach Patentanspruch 1, bei dem die Anhebung des Kohlenwasserstoff-Anteils des Abgases so vorgenommen wird, dass die Umwandlung der Kohlenwasserstoffe des Abgases an der Oxidationsbeschichtung (4) ein Auskühlen des wenigstens einen Heizapparates (3) unter eine zweite Solltemperatur (20) verhindert.

3. Verfahren nach Patentanspruch 1 oder 2, bei dem mehrere Zylinder (5) der Verbrennungskraftmaschine (2) mit einer Kraftstoffzugabe (6) ausgeführt sind, wobei in Schritt c) mittels wenigstens einer Kraftstoffzugabe (6) eine vorgegebene Kraftstoffmenge für den wenigstens einen Heizapparat (3) bereit gestellt wird.

4. Verfahren nach Patentanspruch 3, bei dem stets alle Kraftstoffzugaben (6) aller Zylinder (5) der Verbrennungskraftmaschine (2) eine Teilmenge der vorgegebenen Kraftstoffmenge bereitstellt.

5. Verfahren nach einem der vorhergehenden Patentansprüche, bei dem Anhebung des Kohlenwasserstoff-Anteils des Abgases in einer Schubphase der Verbrennungskraftmaschine (2) erfolgt.

6. Verfahren nach einem der vorhergehenden Patentansprüche, bei dem ermittelt wird, ob Schritt c) ein Auskühlen des wenigstens einen Heizapparates (3) unter eine zweite Solltemperatur (20) verhindern wird, wobei im Fall einer negativen Bewertung der wenigstens eine Heizapparat (3) zusätzlich intermittierend mittels elektrischer Energie aktiviert wird.

7. Kraftfahrzeug (7), aufweisend eine mit Luftüberschuss betriebene Verbrennungskraftmaschine (2), die mehrere Zylinder (5) mit jeweils einer Kraftstoffzugabe (6) hat, und mit einer Vorrichtung (1) zur Reinigung des in der Verbrennungskraftmaschine (2) erzeugten Abgases, wobei die Vorrichtung (1) wenigstens einen Heizapparat (3) nach Art eines elektrisch beheizbaren Wabenkörpers (8) aufweist, der mit einer Spannungsquelle (9) und einer Regeleinheit (10) verbunden ist, wobei das Kraftfahrzeug (7) und die Regeleinheit (10) eingerichtet zur Durchführung des Verfahrens nach einem der vorhergehenden Patentansprüche sind.

## Claims

1. Method for operating a device (1) for the purification of exhaust gas of an internal combustion engine (2) which is operated with an excess of air, wherein the device (1) comprises at least one heating apparatus (3) which is at least partially in contact with exhaust gas and which can be activated by means of electrical energy and which is formed at least partially with an oxidation coating (4), wherein:
a) the at least one heating apparatus (3) is heated up to above a predetermined first setpoint temperature (19),
b) subsequently, at least the temperature of the at least one heating apparatus (3) or of the exhaust gas is monitored, and
c) an increase in the hydrocarbon fraction of the exhaust gas is initiated if at least
- the temperature of the heating apparatus (3) or of the exhaust gas has falls below a threshold temperature (21), or
- a low-load phase (24) of the internal combustion engine (2) is present.

2. Method as claimed in patent claim 1, in which the increase in the hydrocarbon fraction of the exhaust gas is carried out such that the conversion of the hydrocarbons of the exhaust gas on the oxidation coating (4) prevents the at least one heating apparatus (3) from cooling down to below a second setpoint temperature (20).

3. Method as claimed in patent claim 1 or 2, in which a plurality of cylinders (5) of the internal combustion engine (2) is provided with a fuel dosing means (6), wherein in step c), a predetermined amount of fuel is provided for the at least one heating apparatus (3) by at least one fuel dosing means (6).

4. Method as claimed in patent claim 3, in which all the fuel dosing means (6) of all the cylinders (5) of the internal combustion engine (2) always provide a partial amount of the predetermined amount of fuel.

5. Method as claimed in one of the preceding patent claims, in which the increase in the hydrocarbon fraction of the exhaust gas takes place in an overrun phase of the internal combustion engine (2).

6. Method as claimed in one of the preceding patent claims, in which it is determined whether step c) will prevent the at least one heating apparatus (3) from cooling down to below a second setpoint temperature (20), wherein in the case of a negative evaluation, the at least one heating apparatus (3) is additionally intermittently activated by means of electrical energy.

7. Motor vehicle (7) having an internal combustion engine (2) which is operated with an excess of air and which has a plurality of cylinders (5) with in each case one fuel dosing means (6), and having a device (1) for the purification of the exhaust gas produced in the internal combustion engine (2), the device (1) having at least one heating apparatus (3) in the form of an electrically heatable honeycomb body (8) which is connected to a voltage source (9) and to a control unit (10), the motor vehicle (7) and the control unit (10) being set up for carrying out the method as claimed in one of the preceding patent claims.

## Revendications

1. Procédé pour faire fonctionner un dispositif (1) destiné à la purification de gaz d'échappement d'un moteur à combustion interne (2) fonctionnant avec un excès d'air, dans lequel le dispositif (1) comprend au moins un appareil de chauffage (3) se trouvant au moins partiellement en contact avec les gaz d'échappement, lequel peut être activé au moyen de l'énergie électrique et est réalisé au moins en partie avec un revêtement d'oxydation (4), dans lequel
a) on chauffe ledit au moins un appareil de chauffage (3) au-dessus d'une première température de consigne prédéterminée (19),
b) on surveille ensuite au moins la température dudit au moins un appareil de chauffage (3) ou des gaz d'échappement, et
c) on provoque une élévation de la proportion d'hydrocarbures des gaz d'échappement, lorsqu'au moins
- la température de l'appareil de chauffage (3) ou des gaz d'échappement a baissé sous une température limite (21), ou
- il existe une phase de faible charge (24) du moteur à combustion interne (2).

2. Procédé selon la revendication 1, dans lequel on opère l'élévation de la proportion d'hydrocarbures des gaz d'échappement d'une manière telle que la conversion des hydrocarbures des gaz d'échappement sur la couche d'oxydation (4) empêche un refroidissement dudit au moins un appareil de chauffage (3) en dessous d'une deuxième température de consigne (20).

3. Procédé selon la revendication 1 ou 2, dans lequel plusieurs cylindres (5) du moteur à combustion interne (2) sont réalisés avec une addition de carburant (6), dans lequel on prépare à l'étape c), au moyen d'au moins une addition de carburant (6), une quantité de carburant prédéterminée pour ledit au moins un appareil de chauffage (3).

4. Procédé selon la revendication 3, dans lequel toutes les additions de carburant (6) de tous les cylindres (5) du moteur à combustion interne (2) préparent en permanence une quantité partielle de la quantité de carburant prédéterminée.

5. Procédé selon l'une quelconque des revendications précédentes, dans lequel l'élévation de la proportion d'hydrocarbures des gaz d'échappement a lieu dans une phase de refoulement du moteur à combustion interne (2).

6. Procédé selon l'une quelconque des revendications précédentes, dans lequel on détermine si à l'étape c) un refroidissement dudit au moins un appareil de chauffage (3) en dessous d'une deuxième température de consigne (20) est empêché, dans lequel, dans le cas d'une évaluation négative, on active en outre par intermittence ledit au moins un appareil de chauffage (3) au moyen d'énergie électrique.

7. Véhicule automobile (7), comprenant un moteur à combustion interne (2) fonctionnant avec un excès d'air, qui comporte plusieurs cylindres (5) munis chacun d'une addition de carburant (6), et avec un dispositif (1) destiné à la purification des gaz d'échappement produits dans le moteur à combustion interne (2), dans lequel le dispositif (1) présente au moins un appareil de chauffage (3) à la manière d'un corps en nid d'abeilles (8) à chauffage électrique, qui est relié à une source de tension (9) et à une unité de régulation (10), dans lequel le véhicule automobile (7) et l'unité de régulation (10) sont conçus en vue de la mise en oeuvre du procédé selon l'une quelconque des revendications précédentes.
